# EUROPÄISCHE PATENTSCHRIFT

(11) **EP 2 479 087 B1**
(45) Veröffentlichungstag und Bekanntmachung des Hinweises auf die Patenterteilung: **02.07.2014**
(21) Anmeldenummer: 12000271.2
(22) Anmeldetag: 18.01.2012
(51) Int. Cl.: B62D 27/02, B23K 1/00, F16B 5/08, B23K 1/005, B23K 1/20, B23K 11/11, B23K 1/19, B23P 15/00, F16B 11/00

(54) **Bauteilanordnung und Verfahren zur Herstellung einer Bauteilanordnung**
Component assembly and method for manufacturing same
Agencement de composant et procédé de fabrication d'un agencement de composant

(30) Priorität: 20.01.2011 DE 102011009066
(43) Veröffentlichungstag der Anmeldung: 25.07.2012
(73) Patentinhaber: ThyssenKrupp System Engineering GmbH, 74076 Heilbronn (DE)
(72) Erfinder: Lösch, Alfred, 66636 Tholey (DE)
(74) Vertreter: Loock, Jan Pieter

(56) Entgegenhaltungen:
- DE-A1- 19 746 165
- DE-A1-102004 019 818
- DE-A1-102008 060 506
- DE-B- 1 201 125

## Beschreibung

### Stand der Technik

Die vorliegende Erfindung geht aus von einer Bauteilanordnung, insbesondere für eine Kraftfahrzeugkarosserie, aufweisend ein erstes und ein zweites Bauteil, wobei das erste Bauteil ein Verbundbauteil mit einem zwischen zwei Deckblechen angeordneten Kernmaterial aufweist, wobei das zweite Bauteil ein Metallbauteil aufweist und wobei eines der Deckbleche mittels einer Lötverbindung unmittelbar mit dem zweiten Bauteil verbunden ist.

In der Herstellung von Kraftfahrzeugkarosserien werden zunehmend Leichtbauteile verwendet, um das Gesamtgewicht des herzustellenden Kraftfahrzeugs und somit den Kraftstoffverbrauch zu reduzieren. Solche Leichtbauteile bestehen häufig aus Sandwichstrukturen, bei denen ein weiches und leichtes Kernmaterial zwischen zwei kraftaufnehmenden Decklagen angeordnet ist. Solche Leichtbauteile sind trotz ihres geringen Gewichts vergleichsweise biegesteif. Die verschiedenen Bauteile von Fahrzeugkarosserien werden üblicherweise miteinander verschweißt und/oder verlötet, wodurch die Bauteile im Bereich der Schweiß- oder Lötnaht einer starken Hitzebeanspruchung ausgesetzt sind. Bei solchen Schweiß- oder Lötverfahren besteht bei der Verwendung der oben beschriebenen Leichtbauteilen die Gefahr, dass sich das Kernmaterial bei einer zu höhen Hitzeentwicklung von der Decklage ablöst, wodurch die Stabilität des Leichtbauteils erheblich beeinträchtigt wird.

Zur Lösung dieses Problems schlägt die Druckschrift DE 10 2008 060 506 A1 ein Anbauteil einer Kraftfahrzeugkarosserie mit einem Sandwichblech als Außenhaut und einer aus einem Vollblech bestehenden Unterstruktur vor, bei welchem die Unterstruktur einen in seiner Dicke verdoppelten Rand aufweist. Der verdoppelte Rand wird beispielsweise zu einem Umschlag gefalzt oder es wird ein separater Blechstreifen an die Unterstruktur angeschweißt. Das Sandwichblech wird durch Löten mit dem verdoppelten Rand verbunden. Die Verdopplung des Randes dient dazu, die Wärmeleitfähigkeit der Unterstruktur im Lötbereich zu erhöhen, so dass die beim Löten entstehende Wärme in Richtung der Unterstruktur abgeführt wird und auf diese Weise der Wärmeeintrag in das Sandwichblech zu reduziert wird. Nachteilig an dieser Lösung ist, dass eine Befestigung zwischen Sandwichblech und Unterstruktur ausschließlich in einem geschwächten Bereich des Sandwichbleches erzielt wird. Durch den Lötvorgang kommt es einerseits im Bereich der Lötverbindung zwischen dem Deckblech des Sandwichblechs und der Unterstruktur nach wie vor zu einer erhöhten Wärmeentwicklung, wodurch die Haftung zwischen dem Kernmaterial und dem Deckblech geschwächt ist. Andererseits greift genau in diesem geschwächten Bereich die Lötverbindung an, so dass die Stabilität des Anbauteils stark beeinträchtigt ist.

Es war deshalb die Aufgabe der vorliegenden Erfindung eine Bauteilanordnung und ein Verfahren zur Herstellung einer Bauteilanordnung zur Verfügung zu stellen, dass die Nachteile des Standes der Technik nicht aufweist, sondern eine stabile und kostengünstig herstellbare Verbindung zwischen einem Sandwichbauteil und einem Metallbauteil ermöglicht.

### Offenbarung der Erfindung

Gelöst wird die Aufgabe mit einer Bauteilanordnung, insbesondere für eine Kraftfahrzeugkarosserie, aufweisend ein erstes und ein zweites Bauteil, wobei das erste Bauteil ein Verbundbauteil mit einem zwischen zwei Deckblechen angeordneten Kernmaterial aufweist, wobei das zweite Bauteil ein Metallbauteil aufweist und wobei eines der Deckbleche mittels einer thermischen Verbindung, insbesondere einer Lötverbindung mit dem zweiten Bauteil verbunden ist und wobei ferner das erste Bauteil ein Verbindungsblech aufweist, welches zumindest teilweise im Bereich der thermischen Verbindung, insbesondere der Lötverbindung angeordnet ist, wobei das eine Deckblech mittels einer separaten weiteren Verbindung mit dem Verbindungsblech verbunden ist.

Die erfindungsgemäße Bauteilanordnung hat gegenüber dem Stand der Technik den Vorteil, dass eine Befestigung zwischen dem Verbundbauteil und dem Metallbauteil nicht nur in einem durch die thermische Verbindung, insbesondere der Lötverbindung, geschwächten Bereich des Verbundbauteils erfolgt, sondern dass neben der unmittelbaren Verbindung zwischen dem Verbundbauteil und dem Metallbauteil mittels der thermischen Verbindung, insbesondere der Lötverbindung ferner auch eine Befestigung zwischen dem Verbundbauteil und dem Metallbauteil über das Verbindungsblech erfolgt. Die separate Verbindung zwischen dem Deckblech und dem Verbindungsblech umfasst keine Lötverbindung, so dass das Verbundbauteil in diesem Bereich nicht geschwächt ist. Das Verbindungsblech weist ferner eine Lötverbindung zum Metallbauteil auf, so dass eine stabile mittelbare Verbindung zwischen dem Verbundbauteil und dem Metallbauteil über das Verbindungsblech erzielt wird. Gleichzeitig wird durch die unmittelbare Lötverbindung zwischen dem Verbundbauteil und dem Metallbauteil ein optisch ansprechender Abschluss, insbesondere eine Dichtkante zwischen dem Verbundbauteil und dem Metallbauteil erzielt. Vorteilhafterweise wird bei einer Belastung der Verbindung zwischen dem ersten und zweiten Bauteil die auf das Verbundbauteil wirkende Kraft durch die Verwendung des Verbindungsblechs auf eine größere Fläche des Deckblechs verteilt. Die Vergrößerung der Kraftübertragungsfläche führt ferner dazu, dass das Auftreten von Spannungsspitzen im Fügebereich vermieden wird und somit die Lebensdauer und die Haltbarkeit der Bauteilanordnung gesteigert wird. Das Verbindungsblech dient zur Erhöhung der Festigkeit der Verbindung zwischen dem Verbundbauteil und dem Metallbauteil. Gleichzeitig dient das Verbindungsblech ferner zur Ableitung der Wärme aus dem Deckblech des Verbundbauteils während des Lötvorgangs. Die Ableitung der Wärme ist dabei im Vergleich zum Stand der Technik erheblich effektiver, da bei der erfindungsgemäßen Bauteilanordnung das Verbindungsblech während des Lötverfahrens vorzugsweise schon fest mit dem Deckblech verbunden ist und nicht erst wie aus dem Stand der Technik bekannt durch die herzustellende Lötverbindung mit dem Deckblech verbunden wird. Die thermische Verbindung umfasst vorzugsweise die Lötverbindung oder alternativ Heißklebe- und/oder Schweißverbindungen. Die Lötverbindung umfasst vorzugsweise eine im Rahmen eines Laserlötverfahrens hergestellte Lötverbindung. Das Metallbauteil umfasst vorzugsweise ein Vollmaterial aus Metall, beispielsweise ein Karosserieblech oder dergleichen.

Gemäß einer bevorzugten Ausführungsform der vorliegenden Erfindung ist vorgesehen, dass die weitere Verbindung eine kraft-, form- und/oder stoffschlüssige Verbindung und insbesondere eine Nietverbindung, eine Durchsetzfügeverbindung, eine Klebeverbindung, eine Punktschweißverbindung, eine Schraubverbindung, eine Pressverbindung, eine Kragenfügeverbindung und/oder eine Umformfügeverbindung umfasst. In vorteilhafter Weise sind somit insbesondere Kaltfügeverfahren zwischen dem einen Deckblech und dem Verbindungsblech vorgesehen, so dass die Gefahr einer Beeinträchtigung der Haftung zwischen dem Kernmaterial und dem Deckblech ausgeräumt wird.

Gemäß einer weiteren bevorzugten Ausführungsform ist vorgesehen, dass die Lötverbindung einen ersten Teilbereich, welcher das Deckblech und das zweite Bauteil unmittelbar miteinander verbindet, und einen zweiten Teilbereich, welcher das Verbindungsblech und das erste Bauteil unmittelbar miteinander verbindet, umfasst. In vorteilhafter Weise wird somit durch die Herstellung einer einzigen Lötverbindung sowohl eine Verbindung zwischen dem Metallbauteil und dem Verbundbauteil, welche insbesondere einen optisch sauberen und ansprechenden Abschluss bildet, und eine Verbindung zwischen dem Metallbauteil und dem Verbindungsblech hergestellt, welche eine besonders stabile Befestigung zwischen dem ersten und zweiten Bauteil gewährleistet. Im Vergleich zum Stand der Technik sind somit keine zusätzlichen Verfahrensschritte notwendig, so dass die erfindungsgemäße Bauteilanordnung vergleichsweise kostengünstig herstellbar ist. Vorzugsweise ragt insbesondere nur ein Randbereich des Verbindungsbleches in den Bereich der Lötverbindung hinein, so dass der zweite Teilbereich der Lötverbindung sich vorzugsweise vom Randbereich zum Metallbauteil erstreckt. Ferner wird das Verbindungsblech vom ersten Teilbereich der Lötverbindung überdeckt. Für einen von außen auf die Lötverbindung schauenden Betrachter ist das Verbindungsblech somit vorteilhafterweise nicht zu sehen. Das Verbundbauteil weist im Bereich der Lötverbindung insbesondere einen abgekanteten Flansch auf, wobei das Verbindungsblech auf einer dem zweiten Bauteil zugewandten Außenseite des Flansches angeordnet ist. Denkbar ist ferner, dass das Metallbauteil im Bereich der Lötverbindung einen Falz aufweist, welcher vorzugsweise als Umschlag ausgebildet ist und vorteilhafterweise zur effizienteren Wärmeableitung der beim Lötvorgang erzeugten Wärme in Richtung des Metallbauteils vorgesehen ist.

Gemäß einer weiteren bevorzugten Ausführungsform ist vorgesehen, dass das Verbundbauteil eine Außenhaut einer Fahrzeugkarosserie und insbesondere die Außenhaut eines Fahrzeugkarosseriedaches oder einer Fahrzeugmotorhaube umfasst und/oder dass das zweite Bauteil eine Unterstruktur und insbesondere eine Seitenwand einer Fahrzeugkarosserie umfasst. In vorteilhafter Weise wird somit eine kostengünstige Herstellung einer vergleichsweise leichten Karosserie ermöglicht, welche im Vergleich zum Stand der Technik sehr stabil ist. Auf diese Weise wird der Kraftstoffverbrauch des fertigen Fahrzeugs gesenkt und gleichzeitig die Sicherheit erhöht. Denkbar ist aber auch, dass das Verbundbauteil die Außenhaut eines Kotflügels, einer Autotür oder dergleichen umfasst. Es ist für einen Fachmann selbstverständlich, dass die erfindungsgemäße Bauteilanordnung alternativ auch in anderen Bereichen einsetzbar ist. Denkbar sind hierbei jegliche Bereiche, in welchen ein in Sandwichbauweise hergestelltes Leichtbaumaterial in stabiler Art und Weise mit einem Metallbauteil zu verbinden ist.

Ein weiterer Gegenstand der vorliegenden Erfindung ist ein Verfahren zur Herstellung einer erfindungsgemäßen Bauteilanordnung, wobei in einem ersten Verfahrensschritt ein Verbundbauteil mit einem zwischen zwei Deckblechen angeordneten Kernmaterial bereitgestellt wird, wobei in einem zweiten Verfahrensschritt ein Verbindungsblech mit einem der Deckbleche verbunden wird und wobei in einem dritten Verfahrensschritt das Verbindungsblech mittels eines thermischen Verbindungsverfahrens, insbesondere ein Lötverfahren mit dem zweiten Bauteil verbunden wird. Vorzugsweise wird im dritten Verfahrensschritt ferner das Deckblech mittels des thermischen Verbindungsverfahrens, insbesondere das Lötverfahren mit dem zweiten Bauteil verbunden. Das erfindungsgemäße Verfahren ermöglicht eine vergleichsweise kostengünstige Herstellung der Bauteilanordnung, da die thermische Verbindung, insbesondere die Lötverbindung zwischen dem Verbindungsblech und dem Metallbauteil und die thermische Verbindung, insbesondere die Lötverbindung zwischen dem einen Deckblech und dem Metallbauteil vorzugsweise in einem einzigen thermischen Verbindungsverfahren, insbesondere Lötprozess hergestellt wird, so dass im Vergleich zum Stand der Technik kein zusätzlicher Herstellungsschritt notwendig ist. Die Lötverbindung wird insbesondere in einem Laserstrahl-Lötverfahren erzeugt. Insbesondere wird durch das Einbringen des Verbindungsbleches die Verwendung eines Standard-Lötverfahren mit hohen Schmelztemperaturen möglich, da die hohen Schmelztemperaturen nicht unmittelbar zur Schädigung des Sandwichbleches führen. Auch eine Verwendung von kostengünstigen Standard-Sandwichbauteilen wird ermöglicht, welche üblicherweise Kernmaterialien mit vergleichsweise niedriger thermischer Belastungsgrenze umfassen. Der erste und zweite Schritt ist im Sinne der vorliegenden Erfindung auch dahingehend zu verstehen, dass im ersten Schritt eine Verbundanordnung bestehend aus einem mit einem Verbindungsblech bereits verbundenen Verbundbauteil bereitgestellt wird. Der zweite Schritt würde in diesem Fall entfallen, da bei der Verbundanordnung das Verbundbauteil bereits mit dem Verbindungsblech verbunden ist.

Gemäß einer weiteren bevorzugten Ausführungsform ist vorgesehen, dass im zweiten Verfahrensschritt das Verbindungsblech mit dem einen Deckblech kraft-, form- und/oder stoffschlüssig und insbesondere mittels Nieten, Kleben, Punktschweißen, Umformfügen, Pressfügen, Durchsetzfügen, Kragenfügen und/oder Verschrauben verbunden wird. In vorteilhafter Weise wird somit eine stabile Verbindung zwischen dem Verbundbauteil und dem Verbindungsblech hergestellt, ohne dass es zu einer Ablösung des Kernmaterials vom Deckblech aufgrund von übermäßiger Wärmeentwicklung kommt. Ein optional vorgesehenes Punktschweißverfahren führt zwar zu einer Wärmeentwicklung im Verbundbauteil, jedoch nur punktuell.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

Kurze Beschreibung der Zeichnungen
- **Figur 1**: zeigt eine schematische Schnittbildansicht einer Bauteilanordnung gemäß einer ersten Ausführungsform der vorliegenden Erfindung.
- **Figur 2**: zeigt eine schematische Schnittbildansicht einer Bauteilanordnung gemäß einer zweiten Ausführungsform der vorliegenden Erfindung.
- **Figur 3**: zeigt eine schematische Schnittbildansicht einer Bauteilanordnung gemäß einer dritten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

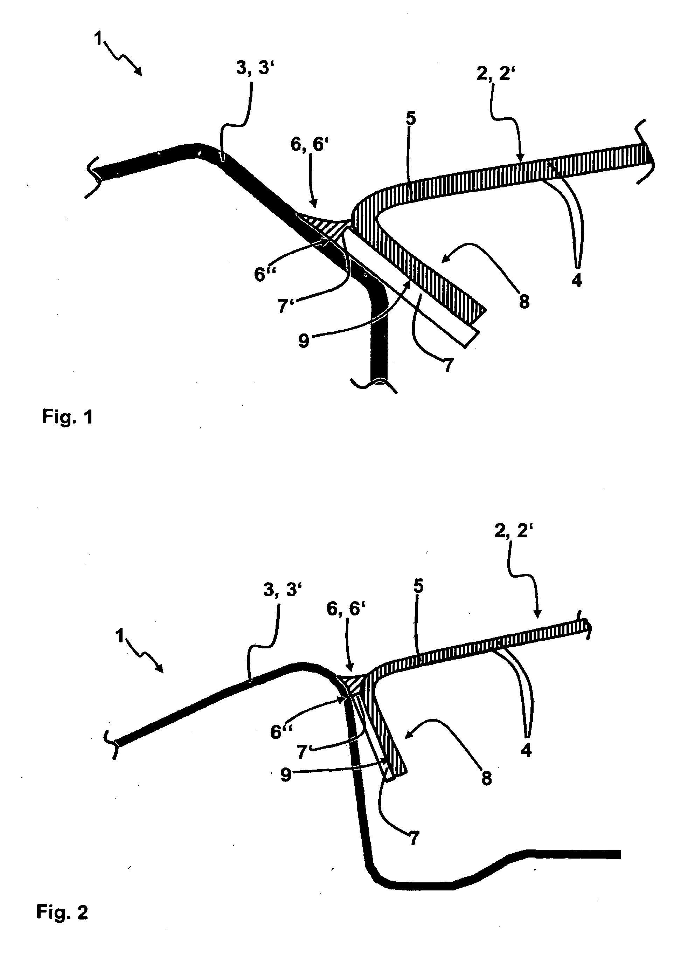

In **Figur 1** ist eine schematische Schnittbildansicht einer Bauteilanordnung 1 gemäß einer beispielhaften ersten Ausführungsform der vorliegenden Erfindung dargestellt.

Die Bauteilanordnung 1 umfasst ein erstes Bauteil 2 und ein zweites Bauteil 3. Das erste Bauteil 2 umfasst ein in Sandwichbauweise hergestelltes Verbundbauteil 2'. Das Verbundbauteil 2' umfasst zwei Deckbleche 4, zwischen welchen ein Kernmaterial 5, beispielsweise ein Kunststoff-Schaumkern, angeordnet ist. Das erste Bauteil 2 weist auf seiner dem zweiten Bauteil 3 zugewandten Seite einen abgekanteten Flansch 8 auf, an dessen Außenseite ein Verbindungsblech 7 angeordnet ist. Das Verbindungsblech 7 weist eine mittels eines Kaltfügeverfahrens erzeugte separate weitere Verbindung 9 zum Deckblech 4 des Verbundbauteils 2' auf. Beispielsweise ist das Verbindungsblech 7 am Verbundbauteil 2' festgenietet oder mittels einer Durchsetzfügeverbindung (auch als Clinch-Verbindung bezeichnet) mit dem Verbundbauteil 2' befestigt. Aus Gründen der Übersichtlichkeit ist die Ausbildung der separaten weiteren Verbindung 9 nicht im Detail dargestellt. Das Verbundbauteil 2' ist vorzugsweise Teil einer Außenhaut eines Kraftfahrzeug-Daches. Das zweite Bauteil 3 umfasst ein Metallbauteil 3', welches ein Teil einer Seitenwand einer Fahrzeugkarosserie bildet.

Das erste und zweite Bauteil 2, 3 sind mittels einer Lötverbindung 6 (in Figur 1 als schraffierter Bereich dargestellt) miteinander verbunden. Die Lötverbindung 6 verbindet dabei das dem Metallbauteil 3' zugewandte Deckblech 4 des Verbundbauteils 2' mit dem Metallbauteil 3', sowie das Verbindungsblech 7 mit dem Metallbauteil 3'. Die Lötverbindung 6 umfasst hierzu einen ersten Teilbereich 6' und einen zweiten Teilbereich 6". Im ersten Teilbereich 6' wird mittels der Lötverbindung 6 eine unmittelbare Verbindung zwischen dem Deckblech 4 und dem Metallbauteil 3' hergestellt, während im zweiten Teilbereich 6" mittels der Lötverbindung 6 eine unmittelbare Verbindung zwischen dem Verbindungsblech 7 und dem Metallbauteil 3' hergestellt wird. Der zweite Teilbereich 6" erstreckt sich dabei von einem Randbereich 7' des Verbindungsblechs 7 zum Metallbauteil 3'. Die Lötverbindung 6 wird vorzugsweise in einem einzigen Lötprozess derart hergestellt, dass sich in diesem einen Lötprozess sowohl der erste Teilbereich 6', als auch der zweite Teilbereich 6', 6" der Lötverbindung 6 ausbilden. Der Randbereich 7' des Verbindungsbleches 7 wird durch den ersten Teilbereich 6' der Lötverbindung 6 vollständig überdeckt ist.

Die Lötverbindung 6 erzeugt somit eine saubere und optische ansprechende Dichtkante zwischen dem Metallbauteil 3' und dem Verbundbauteil 2'. Gleichzeitig sorgt die Lötverbindung 6 für eine stabile Verbindung zwischen dem Metallbauteil 3' und dem Verbindungsblech 7. Die separate weitere Verbindung 9 sorgt wiederrum für eine stabile Verbindung zwischen dem Verbindungsblech 7 und dem Deckblech 4 des Verbundbauteils 2', wobei das Kaltfügeverfahren zur Herstellung der separate weitere Verbindung 9 sicherstellt, dass keine Ablösung zwischen dem Deckblech 4 und dem Kernmaterial 5 im Bereich des separaten weiteren Verbindung 9 aufgrund von zu starker Wärmeentwicklung im Deckblech 4 zu befürchten ist. Das Verbindungsblech 7 vergrößert hingegen die Kraftübertragungsfläche zwischen dem Metallbauteil 2' und dem Deckblech 4, welches dem Metallbauteil 2' zugewandt ist, so dass sich insgesamt die Festigkeit zwischen dem ersten und dem zweiten Bauteil 3, 4 erheblich erhöht. Insbesondere wird hierdurch einerseits eine punktuelle Belastung des Deckbleches 4 verhindert und andererseits eine Belastung des Deckbleches 4 in Bereichen, in welchen das Deckblech 4 durch eine Loslösung vom Kernmaterial 5 geschwächt ist, verhindert. Die Lebensdauer der erfindungsgemäßen Bauteilanordnung 1 wird somit im Vergleich zum Stand der Technik gesteigert.

In **Figur 2** ist eine schematische Schnittbildansicht einer Bauteilanordnung 1 gemäß einer beispielhaften zweiten Ausführungsform der vorliegenden Erfindung dargestellt, welche im Wesentlichen der in Figur 1 illustrierten ersten Ausführungsform gleicht, wobei bei der Bauteilanordnung 1 gemäß der zweiten Ausführungsform lediglich der Randbereich 7' des Verbindungsblechs 7 unmittelbar in Kontakt sowohl mit dem Metallbauteil 3', als auch mit dem Verbundbauteil 2' ist. Eine Anbindung des Verbindungsblechs 7 an das Metallbauteil 3' erfolgt somit ausschließlich durch die Randbereich 7' angreifende Lötverbindung 6.

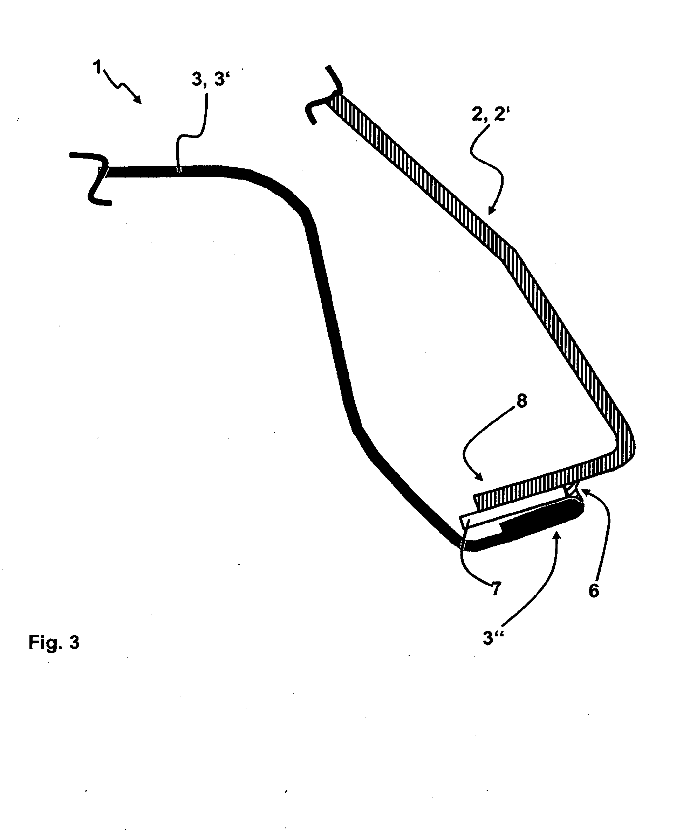

In **Figur 3** ist eine schematische Schnittbildansicht einer Bauteilanordnung 1 gemäß einer beispielhaften dritten Ausführungsform der vorliegenden Erfindung dargestellt, welche im Wesentlichen ebenfalls der in Figur 1 illustrierten ersten Ausführungsform gleicht, wobei bei der Bauteilanordnung 1 gemäß der dritten Ausführungsform das Verbundbauteil 2' eine Motorhaube umfasst, welche über die Lötverbindung 6 an einer Unterstruktur befestigt ist, und wobei das Metallbauteil 3' im Bereich der Lötverbindung 6 einen als Umschlag ausgebildeten Falz 3" aufweist.

### Bezugszeichenliste

- 1: Bauteilanordnung
- 2: Erstes Bauteil
- 2': Verbundbauteil
- 3: Zweites Bauteil
- 3': Metallbauteil
- 3": Falz des Metallbauteils
- 4: Deckblechen
- 5: Kernmaterial
- 6: Lötverbindung
- 6': Erster Teilbereich der Lötverbindung
- 6": Zweiter Teilbereich der Lötverbindung
- 7: Verbindungsblech
- 7': Randbereich des Verbindungsblechs
- 8: Abgekanteten Flansch
- 9: Weitere Verbindung

## Patentansprüche

1. Bauteilanordnung (1), insbesondere für eine Kraftfahrzeugkarosserie, aufweisend ein erstes und ein zweites Bauteil (2, 3), wobei das erste Bauteil (2) ein Verbundbauteil (2') mit einem zwischen zwei Deckblechen (4) angeordneten Kernmaterial (5) und das zweite Bauteil (3) ein Metallbauteil (3') aufweist und wobei eines der Deckbleche (4) mittels einer thermischen Verbindung, insbesondere einer Lötverbindung (6) mit dem zweiten Bauteil (3) verbunden ist, **dadurch gekennzeichnet, dass** das erste Bauteil (2) ferner ein Verbindungsblech (7) aufweist, welches zumindest teilweise im Bereich der thermischen Verbindung angeordnet ist, wobei das eine Deckblech (4) mittels einer separaten weiteren Verbindung (9) mit dem Verbindungsblech (7) verbunden ist.

2. Bauteilanordnung (1) nach Anspruch 1, **dadurch gekennzeichnet, dass** die weitere Verbindung (9) eine kraft-, form- und/oder stoffschlüssige Verbindung und insbesondere eine Nietverbindung, eine Durchsetzfügeverbindung, eine Klebeverbindung, eine Punktschweißverbindung, eine Schraubverbindung, eine Pressverbindung, eine Kragenfügeverbindung und/oder eine Umformfügeverbindung umfasst.

3. Bauteilanordnung (1) nach einem der vorhergehenden Ansprüche, **dadurch gekennzeichnet, dass** die Lötverbindung (6) einen ersten Teilbereich (6'), welcher das Deckblech (4) und das zweite Bauteil (3) unmittelbar miteinander verbindet, und einen zweiten Teilbereich (6"), welcher das Verbindungsblech (7) und das erste Bauteil (2) unmittelbar miteinander verbindet, umfasst.

4. Bauteilanordnung (1) nach einem der vorhergehenden Ansprüche, **dadurch gekennzeichnet, dass** ein Randbereich (7') des Verbindungsbleches (7) im Bereich der Lötverbindung (6) angeordnet ist, wobei vorzugsweise der zweite Teilbereich (6") der Lötverbindung (6) eine unmittelbare Verbindung zwischen dem Randbereich (7') und dem zweiten Bauteil (3) umfasst.

5. Bauteilanordnung (1) nach einem der vorhergehenden Ansprüche, **dadurch gekennzeichnet, dass** das Verbundbauteil (2') im Bereich der Lötverbindung (6) einen abgekanteten Flansch (8) aufweist, wobei das Verbindungsblech (7) auf einer dem zweiten Bauteil (3) zugewandten Außenseite des Flansches (8) angeordnet ist und/oder dass das Metallbauteil (3') im Bereich der Lötverbindung (6) einen Falz (3") aufweist.

6. Bauteilanordnung (1) nach einem der vorhergehenden Ansprüche, **dadurch gekennzeichnet, dass** das Verbundbauteil (2') eine Außenhaut einer Fahrzeugkarosserie und insbesondere die Außenhaut eines Fahrzeugkarosseriedaches oder einer Fahrzeugmotorhaube umfasst und/oder dass das zweite Bauteil (3) eine Unterstruktur und insbesondere eine Seitenwand einer Fahrzeugkarosserie umfasst.

7. Verfahren zur Herstellung einer Bauteilanordnung (1) nach einem der vorhergehenden Ansprüche, **dadurch gekennzeichnet, dass** in einem ersten Verfahrensschritt ein Verbundbauteil (2') mit einem zwischen zwei Deckblechen (4) angeordneten Kernmaterial (5) bereitgestellt wird, dass in einem zweiten Verfahrensschritt ein Verbindungsblech (7) mit einem der Deckbleche (4) verbunden wird und dass in einem dritten Verfahrensschritt das Verbindungsblech (7) mittels eines thermischen Verbindungsverfahrens, insbesondere Lötverfahrens mit dem zweiten Bauteil (3) verbunden wird.

8. Verfahren nach Anspruch 7, **dadurch gekennzeichnet, dass** im dritten Verfahrensschritt ferner das eine Deckblech (4) mittels des Lötverfahrens mit dem zweiten Bauteil (3) verbunden wird, und/oder dass im dritten Verfahrensschritt ein Laserstrahl-Lötverfahren durchgeführt wird und/oder dass im dritten Verfahrensschritt die Lötverbindung (6) in einem Randbereich (7') des Verbindungsblechs (7) hergestellt wird.

9. Verfahren nach einem der Ansprüche 7 oder 8, **dadurch gekennzeichnet, dass** im dritten Verfahrensschritt eine Lötverbindung (6) unmittelbar zwischen dem ersten und dem zweiten Bauteil (2, 3), sowie unmittelbar zwischen dem Verbindungsblech (7) und dem zweiten Bauteil (3) hergestellt wird.

10. Verfahren nach einem der Ansprüche 7 bis 9, **dadurch gekennzeichnet, dass** im zweiten Verfahrensschritt das Verbindungsblech (7) mit dem einen Deckblech (4) kraft-, form- und/oder stoffschlüssig und insbesondere mittels Nieten, Kleben, Punktschweißen, Umformfügen, Pressfügen, Durchsetzfügen, Kragenfügen und/oder Verschrauben verbunden wird.

## Claims

1. A component arrangement (1), particularly for a motor vehicle chassis, comprising a first and a second component (2, 3), the first component (2) comprising a composite component (2') having a core material (5) disposed between two sheet metal covers (4) and the second component (3) comprising a metal component (3') and one of the sheet metal covers (4) being connected to the second component (3) by means of a thermal connection, particularly by means of a soldered connection (6), **characterized in that** the first component (2) further comprises a sheet metal connector (7) at least partially disposed in the area of the thermal connection, wherein the one sheet metal cover (4) is connected to the sheet metal connector (7) by means of an additional separate connection (9).

2. The component arrangement (1) according to claim 1, **characterized in that** the additional connection (9) is a force-fit, form-fit and/or positive material connection, and in particular a rivet connection, a clinched connection, an adhesive connection, a screw connection, a spot weld connection, a press fit connection, a collar joint connection, and/or a deformation joint connection.

3. The component arrangement (1) according any one of the preceding claims, **characterized in that** the soldered connection (6) comprises a first partial area (6') directly connecting the sheet metal cover (4) and the second component (3) to each other, and a second partial area (6") directly connecting the sheet metal connector (7) and the first component (2) to each other.

4. The component arrangement (1) according any one of the preceding claims, **characterized in that** an edge area (7') of the sheet metal connector (7) is disposed in the area of the soldered connection (6), wherein the second partial area (6") of the soldered connection (6) preferably comprises a direct connection between the edge area (7') and the second component (3).

5. The component arrangement (1) according any one of the preceding claims, **characterized in that** the composite component (2') comprises a bent flange (8) in the area of the soldered connection (6), wherein the sheet metal connector (7) is disposed on an outer side of the flange (8) facing toward the second component (3) and/or that the metal component (3') comprises a fold (3") in the area of the soldered connection (6).

6. The component arrangement (1) according any one of the preceding claims, **characterized in that** the composite component (2') comprises an outer skin of a vehicle chassis and particularly the outer skin of a vehicle chassis roof or a vehicle hood, and/or that the second component (3) comprises a substructure and particularly a side wall of a vehicle chassis.

7. A method for producing a component arrangement (1) according any one of the preceding claims, **characterized in that** in a first method step a composite component (2') having a core material (5) disposed between two sheet metal covers (4) is provided, that in a second method step a sheet metal connector (7) is connected to one of the sheet metal covers (4), and that in a third method step the sheet metal connector (7) is connected to the second component (3) by means of a thermal connecting method, particularly a soldering method.

8. The method according to claim 7, **characterized in that** in the third method step the one sheet metal cover (4) is connected to the second component (3) by means of the soldering method, and/or that in the third method step a laser beam soldering method is performed, and/or that in the third method step the soldered connection (6) is produced in an edge area (7') of the sheet metal connector (7).

9. The method according to any one of the claims 7 or 8, **characterized in that** in the third method step a soldered connection (6) is produced directly between the first and the second component (2, 3) and directly between the sheet metal connector (7) and the second component (3).

10. The method according to any one of the claims 7 through 9, **characterized in that** in the second method step the sheet metal connector (7) is connected to the one sheet metal cover (4) in a force-fit, form-fit, and/or positive material connection manner, particularly by means of riveting, gluing, spot welding, deformation joining, press fit joining, clinching, collar joining, and/or screwing.

## Revendications

1. Agencement d'éléments de construction (1), en particulier pour une carrosserie de véhicule à moteur, présentant un premier et un second éléments de construction (2, 3), sachant que le premier élément de construction (2) présente un élément de construction composite (2') avec un matériau d'àme (5) disposé entre deux tôles de recouvrement (4) et le second élément de construction (3) présente un élément de construction métallique (3') et sachant que l'une des tôles de recouvrement (4) est reliée au second élément de construction (3) au moyen d'une connexion thermique, en particulier une connexion brasée (6), **caractérisé en ce que** le premier élément de construction (2) présente en outre une tôle de raccordement (7), qui est disposée au moins partiellement dans la zone de la connexion brasée, sachant que ladite tôle de recouvrement (4) est reliée à la tôle de raccordement (7) au moyen d'une connexion séparée supplémentaire (9).

2. Agencement d'éléments de construction (1) selon la revendication 1, **caractérisé en ce que** la connexion supplémentaire (9) comprend un assemblage par force, par forme et/ou par matériau et en particulier un assemblage rivé, un assemblage par clinchage, un assemblage collé, un assemblage par soudage par points, un assemblage vissé, une liaison par pressage, un assemblage à collet et/ou un assemblage par déformation.

3. Agencement d'éléments de construction (1) selon l'une des revendications précédentes, **caractérisé en ce que** l'assemblage brasé (6) comprend une première zone partielle (6'), qui relie directement la tôle de recouvrement (4) avec le second élément de construction (3), et une seconde zone partielle (6"), qui relie la tôle de raccordement (7) avec le premier élément de construction (2).

4. Agencement d'éléments de construction (1) selon l'une des revendications précédentes, **caractérisé en ce qu'**une zone de bordure (7') de la tôle de raccordement (7) est disposée dans la zone de l'assemblage brasé, sachant que, de préférence, la seconde zone partielle (6") de l'assemblage brasé (6) comprend un assemblage direct entre la zone de bordure (7') et le second élément de construction (3).

5. Agencement d'éléments de construction (1) selon l'une des revendications précédentes, **caractérisé en ce que** l'élément de construction composite (2') présente dans la zone de l'assemblage brasé (6) une bride chanfreinée (8), sachant que la tôle de raccordement (7) est disposée sur une face extérieure de la bride (8) orientée vers le second élément de construction (3) et/ou que l'élément de construction métallique (3') présente une pliure (3") dans la zone de l'assemblage brasé (6).

6. Agencement d'éléments de construction (1) selon l'une des revendications précédentes, **caractérisé en ce que** l'élément de construction composite (2') comprend une peau extérieure d'une carrosserie de véhicule et en particulier la peau extérieure d'un toit de carrosserie de véhicule ou d'un capot de moteur de véhicule et/ou que le second élément de construction (3) comprend une substructure et en particulier une paroi latérale d'une carrosserie de véhicule.

7. Procédé pour la fabrication d'un agencement d'éléments de construction (1) selon l'une quelconque des revendications précédentes, **caractérisé en ce que**, dans une première étape de procédé, il est fourni un élément de construction composite (2') avec un matériau d'âme (5) disposé entre deux tôles de recouvrement (4), que, dans une seconde étape de procédé, une tôle de raccordement (7) est reliée avec l'une des tôles de recouvrement (4) et que, dans une troisième étape de procédé, la tôle de raccordement (7) est reliée avec le second élément de construction (3)au moyen d'un procédé d'assemblage thermique, en particulier, d'un procédé de brasage.

8. Procédé selon la revendication 7, **caractérisé en ce que** dans la troisième étape de procédé, la une tôle de recouvrement (4) est en outre reliée avec le second élément de construction (3) au moyen du procédé de brasage, et/ou que, dans la troisième étape de procédé, un procédé de brasage au faisceau laser est effectué et/ou que, dans la troisième étape de procédé, l'assemblage brasé (6) est réalisé dans une zone de bordure (7') de la tôle de raccordement (7).

9. Procédé selon l'une des revendications 7 ou 8, **caractérisé en ce que**, dans la troisième étape de procédé, un assemblage brasé (6) est réalisé directement entre le premier et le second élément de construction (2, 3) ainsi que directement entre la tôle de raccordement (7) et le second élément de construction (3).

10. Procédé selon l'une des revendications 7 à 9, **caractérisé en ce que**, dans la seconde étape de procédé, la tôle de raccordement (7) est reliée avec ladite tôle de recouvrement (4) par un assemblage par force, par forme et/ou par matériau, et en particulier par rivetage, collage, soudage par points, déformation, pressage, clinchage, collet et/ou vissage.
